# EUROPÄISCHE PATENTSCHRIFT

(11) **EP 0 623 484 B1**
(45) Veröffentlichungstag und Bekanntmachung des Hinweises auf die Patenterteilung: **20.11.1996**
(21) Anmeldenummer: 94106534.4
(22) Anmeldetag: 27.04.1994
(51) Int. Cl.: B60J 3/02, F16C 11/04

(54) **Lagervorrichtung, insbesondere für schwenkbar gelagerte Sonnenblenden von Fahrzeugen**
Pivot bearing, especially for pivotally supported sunshields of vehicles
Palier d'articulation, notamment pour des pare-soleils qui sont logés pivotants pour véhicules

(30) Priorität: 07.05.1993 DE 4315232
(43) Veröffentlichungstag der Anmeldung: 09.11.1994
(73) Patentinhaber: BECKER GROUP EUROPE GmbH, 42285 Wuppertal (DE)
(72) Erfinder: Welter, Patrick, F-57730 La Chambre (FR)

(56) Entgegenhaltungen:
- FR-A- 2 495 066

## Beschreibung

Die Erfindrung bezieht sich auf eine Lagervorrichtung, insbesondere für schwenkbar gelagerte Sonnenblenden von Fahrzeugen, mit einer Achse, deren einer Endabschnitt mit dem Fahrzeug verbindbar ist und um deren anderen, in einen Lagerkörper des Sonnenblendenkörpers einsetzbaren Endabschnitt der Sonnenblendenkörper zwischen einer ersten und einer zweiten Endstellung schwenkbar ist und mit einer eine Feder aufweisenden Rasteinrichtung, welche den Sonnenblendenkörper in zumindest einer Stellung des Schwenkbereichs kraftschlüssig mit der Achse verrastet und in ihrem Verstellbereich ein bei einer Verstellung zu überwindendes Moment erzeugt.

Die DE 25 51 633 C2 zeigt ein Lager für einen Sonnenblendenkörper mit einer U-förmig gebogenen Blattfeder, zwischen deren Schenkel die Achse der Lagervorrichtung, auf welcher der Sonnenblendenkörper schwenkbar gelagert ist, eingeklemmt ist. Zur Bildung einer Rasteinrichtung ist die Achse mit Abflachungen versehen, an welchen die Feder in der Raststellung mit ihren Schenkeln anliegt. Die Feder ist relativ groß und zudem relativ aufwendig und teuer in der Herstellung. Ein besonderer Nachteil besteht darin, daß das herkömmliche Lager nur mit äußerst hohem Aufwand aus dem Sonnenblendenkörper entfernt werden kann, was aber erforderlich ist, wenn die Sonnenblende einer Wiederverwertung zugeführt werden soll.

Der Erfindung liegt nun, ausgehend von einer Lagervorrichtung der eingangs genannten Art, die Aufgabe zugrunde, Vorsorge dafür zu treffen, daß diese bei vergleichsweise einfacher und kostengünstiger Herstellbarkeit völlig problemlos wieder aus dem Sonnenblendenkörper entfernt werden kann, um die gesamte Sonnenblende sortenrein recyclen zu können.

Zur Lösung dieser Aufgabe ist erfindungsgemäß vorgesehen, daß der Lagerkörper eine Lagerbohrung mit zumindest einer radialen, sich axial erstreckenden rinnenförmigen Erweiterung aufweist, daß der in die Lagerbohrung eingesetzte Endabschnitt der Achse mit einer sich axial erstreckenden Nut mit geschlossenen Stirnenden und nach außen divergierenden Nutwänden ausgebildet ist und daß in die Nut die deren Länge angepaßte Feder mit Verspannung eingesetzt ist, die aus Federstahlblech besteht und einen U-förmigen Querschnitt mit zu den freien Enden hin konvergierenden, sich an den Nutwänden abstützenden Schenkeln aufweist.

Die erfindungsgemäße Lagervorrichtung besteht aus nur wenigen, äußerst einfach und kostengünstig herzustellenden Teilen und ist zudem schnell und einfach zu montieren und insbesondere auch zu demontieren, weil für letzteres lediglich die Achse zusammen mit der von ihr aufgenommenen Feder aus dem Lagerkörper herauszuziehen ist. Der Sonnenblendenkörper, der vollkommen aus Kunststoffmaterial bestehen kann, ist hiernach ohne weiteres der Wiederverwertung zuführbar.

In Weiterbildung der Erfindung kann vorgesehen sein, daß die im Querschnitt U-förmige Feder mit einer axial durchlaufenden Abbiegung im Steg versehen ist, die dem Steg eine satteldachartige, in die rinnenförmige Erweiterung der Lagerbohrung passende Form verleiht. Die Feder, die aufgrund ihrer Ausbildung und Anordnung stets bestrebt ist, aus der Nut in der Achse heraus zu gleiten, fällt damit weich in die eine Rastposition definierende rinnenförmige Erweiterung der Lagerbohrung bei entsprechender Stellbewegung des Sonnenblendenkörpers ein. Harte Anschlaggeräusche werden vermieden.

Es kann weiterhin vorgesehen sein, daß der Steg der Feder durch einen vom öden der Nut ausgehenden Nocken abgestützt ist, wenn sich die Abbiegung des Stegs außerhalb der zumindest einen rinnenförmigen Erweiterung der Lagerbohrung befindet. Dem Nocken fällt insbesondere aber auch die Aufgabe zu, die Stirnenden der Nut miteinander zu verbinden und damit einer Schwächung der Achse entgegenzuwirken.

Bevorzugterweise besteht der Lagerkörper aus einem verschleißfesten Kunststoffmaterial und ist als Kunststoff-Spritzußteil ausgebildet. Als Kunststoffmaterial kann mit Vorteil Polyacetalharz zum Einsatz gelangen.

Der Lagerkörper ist in weiterer Ausgestaltung der Erfindung vorteilhafterweise an einer den Sonnenblendenkörper aussteifenden, als Kunststoff-Spritzgußteil ausgebildeten Verstärkungseinlage angeordnet. Die getrennte Herstellung des Lagerkörpers und der Verstärkungseinlage bietet den Vorteil, daß nur für den klein dimensionierten Lagerkörper ein hochwertiges Kunststoffmaterial erforderlich ist, während die Verstärkungseinlage aus einem billigeren Material, bevorzugt Polypropylen, gefertigt werden kann. Zudem kann dadurch die Verstärkungseinlage für unterschiedliche Sonnenblendenausführungen eingesetzt werden, wobei dann lediglich der Lagerkörper anzupassen ist, beispielsweise bei veränderten Raststellungen.

Bevorzugterweise sitzt der Lagerkörper zwischen zwei an der Verstärkungseinlage ausgebildeten Lageraugen und ist über eine Steckverbindung an der Verstärkungseinlage angeordnet. Der Öffnungsquerschnitt der Lageraugen ist der Achse angepaßt, so daß die Achse nicht aus dem Lagerkörper herausgezogen werden kann, wenn sich die Feder in der zumindest einen Raststellung befindet. Der Lagerkörper kann einen als zweiarmige Gabel ausgebildeten Körperbereich als Steckaufnahme für die mit der Verstärkungseinlage herzustellende Steckverbindung aufweisen.

Ein Ausführungsbeispiel der Erfindung wird im folgenden anhand der Zeichnung näher erläutert, und es zeigen:
- Fig. 1: eine bereichsweise freigelegte Ansicht einer Sonnenblende für Fahrzeuge mit Lagervorrichtung,
- Fig. 2: die Sonnenblende nach Fig. 1 in einer schaubildlichen Explosivdarstellung,
- Fig. 3: einen Schnitt A-A nach Fig. 2,
- Fig. 4: einen Schnitt B-B nach Fig. 2 in einer Gebrauchslage des Sonnenblendenkörpers und
- Fig. 5: den Schnitt B-B nach Fig. 2 in einer Nichtgebrauchs- bzw. Rastlage des Sonnenblendenkörpers.

Die Sonnenblende besteht aus einem Sonnenblendenkörper 1 mit einem Kern 2 aus Schaummaterial, vorzugsweise expandiertem Polypropylen, einer im Kern 2 eingebetteten Verstärkungseinlage 3 und einer Hülle 4, bei der es sich bevorzugt um eine TPO-Folie handelt. Zur schwenk- und klappbaren Befestigung an einer nicht gezeigten Fahrzeugkarosserie dient eine im Sonnenblendenkörper 1 mit einem Endabschnitt in einen Lagerkörper 5 angeordnete Achse 6, deren anderer Endabschnitt unter Zwischenschaltung eines Böckchens 7 an der Fahrzeugkarosserie befestigbar ist. Am entgegengesetzten Ende des Sonnenblendenkörpers 1 ist eine Gegenlagerachse 8 angeordnet, die zum lösbaren und drehbaren Einhängen in ein nicht gezeigtes Gegenlagerböckchen an der Fahrzeugkarosserie dient. Der im Sonnenblendenkörper 1 gelagerte Schenkel der L-förmig ausgebildeten Achse 6 und die Gegenlagerachse 8 verlaufen fluchtend entlang eines Randbereichs des Sonnenblendekörpers 1 und bilden die Achse beim Herunterklappen der Sonnenblende gegen eine Windschutzscheibe, um sie von der Nichtgebrauchslage im Bereich des Dachhimmels in die Gebrauchslage im Bereich der Windschutzscheibe zu bewegen. Der Sonnenblendenkörper 1 läßt sich auch gegen ein Seitenfenster verschwenken, indem die Gegenlagerachse 8 aus dem Gegenlagerböckchen ausgehängt und um den im Böckchen 7 gelagerten Schenkel der Achse 6 gegen das Seitenfenster geschwenkt wird.

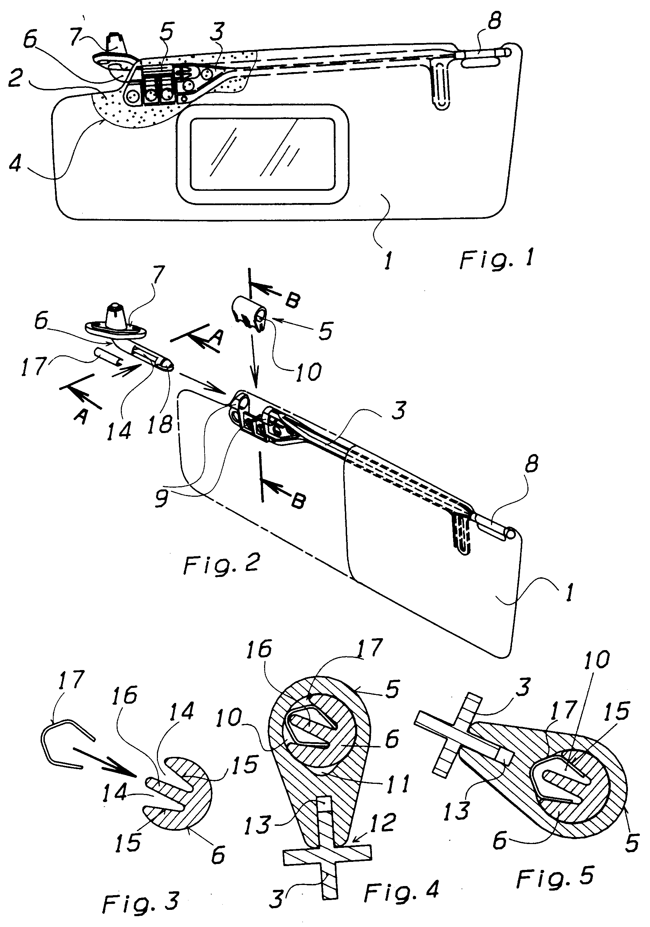

Die Verstärkungseinlage 3 die als Spritzling aus weniger hochwertigem Kunststoffmaterial (Polypropylen) ausgebildet ist, erstreckt sich als im oberen Randbereich des Sonnenblendenkörpers 1 eingelagerte Schiene, die lagerseitig zwei mit Abstand nebeneinander angeordnete Lageraugen 9 aufweist. In die Lücke zwischen den Lageraugen 9 ist der Lagerkörper 5, der als Spritzling aus hochwertigem Kunststoffmaterial hergestellt ist, eingesetzt. Der Lagerkörper 5 weist,wie insbesondere die im Maßstab vergrößerten Fig. 4 und 5 zeigen, eine Lagerbohrung 10 mit einer radialen, sich axial über die gesamte Länge des Lagerkörpers 5 erstreckenden rinnenförmigen Erweiterung 11 auf. Ferner weist der etwa als tropfenförmiges Profil ausgebildete Lagerkörper 5 einen als zweiarmige Gabel ausgebildeten Körperbereich 12 auf, um eine Steckaufnahme 13 zur Herstellung einer Steckverbindung zwischen dem Lagerkörper 5 und der Verstärkungseinlage 3 (vgl. Fig. 4, 5) zu schaffen.

Die Achse 6 weist an ihrem in die Lagerbohrung 10 des Lagerkörpers 5 eingesetzten Endabschnitt eine sich axial erstreckende Nut 14 mit geschlossenen Stirnenden und nach außen divergierenden Nutwänden 15 auf. Die Länge der Nut 14 entspricht etwa der Länge des Lagerkörpers 5. Die Nut 14 ist durch einen von ihrem Boden ausgehenden Nocken 16, der sich über die Nutlänge erstreckt und in die Stirnenden derselben übergeht, geteilt.

Die Nut 18 dient zur Aufnahme einer Feder 17, die als längliches Stanzprägeteil aus Federstahlblech ausgebildet ist, einen U-förmigen Querschnitt mit zu den freien Enden hin konvergierenden, sich an den Nutwänden abstützenden Schenkeln und einen Steg aufweist, der mit einer axial durchlaufenden Abbiegung versehen ist, die dem Steg eine satteldachartige, in die rinnenförmige Erweiterung 11 der Lagerbohrung 10 des Lagerkörpers 5 passende Form verleiht. Die Feder 17 wird umsomehr gespannt, je tiefer sie in die Nut 14 hineingedrückt wird. Fig. 4 zeigt die Wirkstellung der durch den Nocken 16 abgestützten Feder über den Schwenkbereich des Sonnenblendenkörpers 1 und Fig. 5 zeigt die Feder in der Raststellung des Sonnenblendenkörpers 1, die vorzugsweise mit der Nichtgebrauchslage des Sonnenblendenkörpers 1 am Dachhimmel zusammenfällt. Die Feder 17 bewirkt eine Reibkraft, die, wie Untersuchungen gezeigt haben, ausreicht, um den Sonnenblendenkörper 1 in jeder Schwenkstellung zu halten.

Der die Lageraugen 9 der Einlage 3 sowie die Lagerbohrung 10 des Lagerkörpers 5 durchsetzende Endabschnitt der Achse 6 kann am freien Ende mit einer geschlitzten pilzkopfartigen Verdickung 18 versehen sein, um zu verhindern, daß die Achse 6 ungewollt aus dem Lagerkörper 5 herausgezogen werden kann. Der Pilzkopf soll die Demontage lediglich erschweren nicht aber verhindern.

## Patentansprüche

1. Lagervorrichtung für schwenkbar gelagerte Sonnenblenden von Fahrzeugen, mit einer Achse (6), deren einer Endabschnitt mit einem Fahrzeug verbindbar ist und um deren anderen, in einen Lagerkörper (5) eines Sonnenblendenkörpers (1) einsetzbaren Endabschnitt der Sonnenblendenkörper (1) zwischen einer ersten und einer zweiten Endstellung schwenkbar ist, und mit einer eine Feder (17) aufweisenden Rasteinrichtung, welche den Sonnenblendenkörper (1) in zumindest einer Stellung des Schwenkbereichs kraftschlüssig mit der Achse (6) verrastet und welche in ihrem Verstellbereich ein bei einer Verstellung zu überwindendes Moment erzeugt, dadurch gekennzeichnet, daß der Lagerkörper (5) eine Lagerbohrung (10) mit zumindest einer radialen, sich axial erstreckenden rinnenförmigen Erweiterung (11) aufweist, daß der in die Lagerbohrung (10) eingesetzte Endabschnitt der Achse (6) mit einer sich axial erstreckenden Nut (14) mit geschlossenen Stirnenden und nach außen divergierenden Nutwähden (15) ausgebildet ist, und daß in die Nut (14) die deren Länge angepaßte Feder (17) mit Vorspannung eingesetzt ist, die aus Federstahlblech besteht und einen U-förmigen Querschnitt mit zu den freien Enden hin konvergierenden, sich an den Nutwänden (15) abstützenden Schenkeln aufweist.

2. Lagervorrichtung nach Anspruch 1, dadurch gekennzeichnet, daß die im Querschnitt U-förmige Feder (17) mit einer axial durchlaufenden Abbiegung im Steg versehen ist, die dem Steg eine satteldachartige, in die rinnenförmige Erweiterung (11) der Lagerbohrung (10) passende Form verleiht.

3. Lagervorrichtung nach Anspruch 1 oder 2, dadurch gekennzeichnet, daß der Steg der Feder (17) durch einen vom öden der Nut (14) ausgehenden Nocken (16) abgestützt ist, wenn sich die Abbiegung des Stegs außerhalb der zumindest einen rinnenförmigen Erweiterung (11) der Lagerbohrung (10) befindet.

4. Lagervorrichtung nach wenigstens einem der Ansprüche 1 bis 3, dadurch gekennzeichnet, daß der Lagerkörper (5) aus einem verschleßfestem Kunststoffmaterial besteht und als Spritzgaßteil ausgebildet ist.

5. Lagervorrichtung nach wenigstens einem der Ansprüche 1 bis 4, dadurch gekennzeichnet, daß der Lagerkörper (5) an einer den Sonnenblendenkörper (1) aussteifenden, als Kunststoff-Spritzgaßteil ausgebildeten Verstärkungseinlage (3) angeordnet ist.

6. Lagervorrichtung nach wenigstens einem der Ansprüche 1 bis 5, dadurch gekennzeichnet, daß der Lagerkörper (5) zwischen zwei an der Verstärkungseinlage (3) ausgebildeten Lageraugen (9) sitzt und über eine Steckverbindung an der Verstärkungseinlage (3) angeordnet ist.

7. Lagervorrichtung nach wenigstens einem der Ansprüche 1 bis 6, dadurch gekennzeichnet, daß der Lagerkörper (5) einen als zweiarmige Gabel ausgebildeten Körperbereich (12) als Steckaufnahme (13) für die mit der Verstärkungseinlage (3) herzustellende Steckverbindung aufweist.

## Claims

1. Bearing device for pivotably mounted sun visors of vehicles, having a spindle (6), one end section of which can be connected to a vehicle, and it being possible for a sun-visor body (1) to be pivoted, between a first end position and a second end position, about the other end section, which can be inserted into a bearing body (5) of the sun-visor body (1), of said spindle, and having a latching device which has a spring (17), latches the sun-visor body (1) in a frictionally locking manner with the spindle (6) in at least one position of the pivot region, and produces, in its adjustment region, a torque which has to be overcome in the event of an adjustment, characterized in that the bearing body (5) has a bearing bore (10) with at least one radial, axially extending, channel-like widened portion (11), in that the end section of the spindle (6) which is inserted into the bearing bore (10) is designed with an axially extending groove (14) which has closed ends and outwardly diverging groove walls (15), and in that the groove (14) has inserted into it, with prestressing, the spring (17), which is adapted in length to said groove, consists of spring steel plates and has a U-shaped cross-section with legs which converge towards the free ends and are supported on the groove walls (15).

2. Bearing device according to Claim 1, characterized in that the spring (17), which is U-shaped in cross-section, is provided with an axially extending bend in the web, which bend gives the web a gable-roof shape which matches the channel-like widened portion (11) of the bearing bore (10).

3. Bearing device according to Claim 1 or 2, characterized in that the web of the spring (17) is supported by a protuberance (16), extending from the base of the groove (14), when the bend of the web is located outside the at least one channel-like widened portion (11) of the bearing bore (10).

4. Bearing device according to at least one of Claims 1 to 3, characterized in that the bearing body (5) consists of a wear-resistant plastic material and is designed as an injection moulding.

5. Bearing device according to at least one of Claims 1 to 4, characterized in that the bearing body (5) is arranged on a reinforcing insert (3) which stiffens the sun-visor body (1) and is designed as a plastic injection moulding.

6. Bearing device according to at least one of Claims 1 to 5, characterized in that the bearing body (5) is seated between two bearing eyelets (9) formed on the reinforcing insert (3), and is arranged on the reinforcing insert (3) via a plug-in connection.

7. Bearing device according to at least one of Claims 1 to 6, characterized in that the bearing body (5) has a region (12), designed as a two-armed fork, as a plug-in receiving means (13) for the plug-in connection which is to be produced with the reinforcing insert (3).

## Revendications

1. Dispositif de palier pour pare-soleil de véhicules monté pivotant, avec un axe (6) dont une portion d'extrémité peut être reliée à un véhicule et autour de son autre portion d'extrémité, à insérer dans un corps de palier (5) d'un corps (1) de pare-soleil, le corps (1) du pare-soleil peut pivoter entre une première et une deuxième position de fin de course, et avec un dispositif d'encliquetage, présentant un ressort (17), qui encliquette le corps (1) avec l'axe (6), par force, dans au moins une position de la plage de pivotement et qui dans sa plage de réglage produit un moment à surmonter lors d'un réglage, caractérisé en ce que le corps de palier (5) présente un perçage de palier (10) avec au moins un élargissement (11) radial, en forme de gorge, s'étendant axialement, en ce que la portion d'extrémité de l'axe (6), insérée dans le perçage de palier (10), présente une rainure (14) s'étendant axialement avec des extrémités frontales fermées et des parois de rainure (15) divergeant vers l'extérieur et en ce que dans la rainure (14) est inséré avec précontrainte le ressort (17), adapté à sa longueur, qui est en tôle d'acier à ressort et possède une section transversale en U avec des branches convergeant vers les extrémités libres, prenant appui contre les parois de rainure (15).

2. Dispositif de palier selon la revendication 1, caractérisé en ce que le ressort (17) de section transversale en U, est pourvu d'une pliure continue axialement, dans le dos, qui confère au dos une forme de toit à deux versants, s'adaptant dans l'élargissement (11) en gorge du perçage de palier (10).

3. Dispositif de palier selon la revendication 1 ou 2, caractérisé en ce que le dos du ressort (17) est soutenu par une came (16) partant du fond de la rainure (14), lorsque la pliure du dos se trouve à l'extérieur du au moins un élargissement (11) en gorge du perçage de palier (10).

4. Dispositif de palier selon l'une au moins des revendications 1 à 3, caractérisé en ce que le corps de palier (5) est fait d'une matière plastique résistant à l'usure et se présente sous la forme d'un élément moulé par injection.

5. Dispositif de palier selon l'une au moins des revendications 1 à 4, caractérisé en ce que le corps de palier (5) est placé sur une garniture de renfort (3), se présentant sous la forme d'un élément en matière plastique moulée par injection, rendant rigide le corps (1) du pare-soleil.

6. Dispositif de palier selon l'une au moins des revendications 1 à 5, caractérisé en ce que le corps de palier (5) se trouve entre deux oeillets de palier (9), formés sur la garniture de renfort (3), et est placé sur la garniture de renfort (3), par l'intermédiaire d'une liaison à enfichage.

7. Dispositif de palier selon l'une au moins des revendications 1 à 6, caractérisé en ce que le corps de palier (5) présente une zone de corps (12), configurée en fourche à deux bras, servant de logement d'enfichage (13) pour la liaison par enfichage à réaliser avec la garniture de renfort (3).
